# EUROPÄISCHE PATENTSCHRIFT

(11) **EP 1 752 669 B1**
(45) Veröffentlichungstag und Bekanntmachung des Hinweises auf die Patenterteilung: **21.09.2011**
(21) Anmeldenummer: 06460024.0
(22) Anmeldetag: 24.07.2006
(51) Int. Cl.: F16B 41/00, F16B 35/00

(54) **Kälteschützende, feuerbeständige Verbindung**
Cold insulating and fire resistant connection device
Dispositif de connexion protégé contre le froid et résistant au feu

(30) Priorität: 11.08.2005 PL 37659505
(43) Veröffentlichungstag der Anmeldung: 14.02.2007
(73) Patentinhaber: Korff, Michael, 54-060 Wroclaw (PL)
(72) Erfinder: Korff, Michael, 54-060 Wroclaw (PL)
(74) Vertreter: Puschmann, Heinz H.

(56) Entgegenhaltungen:
- EP-A- 0 727 550
- DE-A1- 3 208 171
- GB-A- 171 034
- US-A- 3 144 261
- US-A1- 2004 037 667

## Beschreibung

Die Erfindung betrifft eine thermisch isolierende, feuerbeständige Verbindung gemäß der im Oberbegriff des Anspruches 1 angegebenen Art.

Insbesondere betrifft die Erfindung eine thermisch isolierende, feuerbeständige Verbindung, welche beim Befestigen von thermisch belasteten Anlagen, wie Kälteeinrichtungen, verwendet wird. Insbesondere dient die thermisch isolierende Verbindung zur Befestigung von aufhängbaren kältebelasteten, thermisch isolierten Einrichtungen und Anlagen.

Konstruktionen, die eine mechanische Verbindung der Leitungen von Kälteanlagen mit Decken oder Seitenwänden im Falle der Beschädigung oder Verbrennung der die Leitungen der Kälteanlagen mit der Decke oder den Seitenwände von Räumen verbindenden Bestandteile bei gleichzeitiger, thermisch wirksamer Abtrennung der Kälteanlagen von der Decke oder den Seitenwänden ermöglichen würden, sind unbekannt.

Aus der US 2004/0037667 A1 eine gattungsgemäße isolierende Verbindung bekannt, welche mit einem Isolierkörper versehen ist, in dem zwei Gewindeverbindungsstücke angeordnet sind. Bei Hitze nimmt die Festigkeit des Isolierkörpers ab, durch die anliegende Belastung wird dieser getrennt und die Verbindung ist frei gegeben.

Die bekannten Konstruktionen für Thermoisolation, beispielsweise für Kühlräume, bauen auf Isolierpaneele mit nur geringer Tragfähigkeit, die als Verkleidung von Tragrahmen dienen. Hierdurch werden thermisch isolierende Wände für Kühlräume geschaffen. Die Paneele liegen dabei auf Stoß aneinander an. Die Forderung auch nach einer Feuerbeständigkeit von Kühlräumen wird umso größer, je länger Menschen sich in diesen Kühlräumen aufhalten. Neben der Feuerbeständigkeit müssen derartige Konstruktionen auch im Brandfalle stehen bleiben und nicht zusammenbrechen. Die EP 0 727 550 A1 offenbart dafür ein Kälte schützendes, feuerbeständiges Paneel, welches Polyurethan oder eine ähnliche thermische Isolierung umfasst. Außen ist das Paneel von einer Metallschicht umgeben. Zwischen der Metallschicht und der thermischen Isolierung ist eine Mineralisolierung eingebracht. Die Paneele weisen aneinander liegende überlappende Metallschichten auf, die über Gewindestücke bildende Schrauben verbunden sind. Die Schrauben halten zudem noch einen Streifen aus feuerfestem Material der die Breite des Überlappungsbereiches aufweist. Auf diese Weise wird vermieden, dass auf der einen Seite Feuer im Übergangsbereich der Paneele durchbrechen kann und auf der anderen Seite die Konstruktion nicht so leicht zusammenbricht.

Aufgabe der Erfindung ist es eine isolierende, feuerbeständige Verbindung gemäß der im Oberbegriff des Anspruches 1 angegebenen Art anzugeben, welche eine Haltesicherung bei Beschädigung des Isolierkörpers, beispielsweise durch Feuereinwirkung, aufweist.

Diese Aufgabe wird durch die kennzeichnenden Merkmale des Anspruches 1 in Verbindung mit seinen Oberbegriffsmerkmalen gelöst.

Nach der Erfindung ist eine jeweils einen Sattelarm mit einem Ring aufweisende Hakenverbindung in dem Isolierkörper vorgesehen ist, wobei ein erster Teil der Hakenverbindung mit dem ersten Gewindeverbindungsstück und ein zweiter Teil der Hakenverbindung mit dem zweiten Gewindeverbindungsstück verbunden ist. Die Hakenverbindung wird bei mechanischer Beschädigung des Isolierkörpers oder im Falle eines Feuers und der Verlagerung des zweiten Gewindeverbindungsstücks in Bezug auf das erste Gewindeverbindungsstück aktiviert, indem sich das erste Gewindeverbindungsstück und das zweite Gewindeverbindungsstück durch die Hakenverbindung miteinander unverlierbar gehalten werden. Die Beschädigung kann hierbei mechanischer oder thermischer Natur sein.

Gemäß einer Ausführungsform der Erfindung umfassen beide Teile der Hakenverbindung jeweils einen Sattelarm im Isolierkörper, der mit einem im Isolierkörper angeordneten Ring fest verbunden ist. Der erste Sattelarm des ersten Gewindeverbindungsstücks verläuft durch die Öffnung des durch den zweiten Sattelarm mit dem zweiten Gewindeverbindungsstück verbundenen Rings und der zweite Sattelarm des zweiten Gewindeverbindungsstücks durch die Öffnung des durch den ersten Sattelarm mit dem ersten Gewindeverbindungsstück verbundenen Rings.

Der Isolierkörper umfasst vorzugsweise Polyurethan-Füllmasse.

Insbesondere besteht das erste Gewindeverbindungsstück aus einer Muffe mit einer zweistufigen Gewindebohrung, welche als Sacklochbohrung ausgeführt ist.

Das zweite Gewindeverbindungsstück kann aus einer Schraube bestehen.

Vorzugsweise sind beide Gewindeverbindungsstücke zueinander koaxial angeordnet.

Der Isolierkörper kann zylindrisch ausgebildet sein.

Die Gewindeverbindungsstücke können jeweils in einem Ring verankert sein, am dem Teile der Hakenvorrichtung angreifen.

Eine kälteschützende, feuerbeständige Verbindung nach der Erfindung, die einen zylindrischen, aus thermoisolations-, vorzugsweise Polyurethan-Füllmasse gebildeten Körper beinhaltet, in dem zwei Gewindeverbindungsstücke eingesetzt sind, ist dadurch gekennzeichnet, dass zwei Sattelarme vorgesehen sind, deren Enden mit zugeordneten Ringen fest verbunden sind. Die Gewindeverbindungsstücke sind so zueinander aufgestellt, dass der Sattelarm des oberen Gewindeverbindungsstücks in der Öffnung des anderen, großen Rings des unteren Gewindeverbindungsstücks untergebracht ist, dagegen ist der Sattelarm des unteren Gewindeverbindungsstücks in der Öffnung des großen Rings des oberen Gewindeverbindungsstücks untergebracht.

Weitere Vorteile, Merkmale und Anwendungsmöglichkeiten der Erfindung einer isolierenden Verbindung ergeben sich aus der nachfolgenden Beschreibung in Verbindung mit dem in der Zeichnung dargestellten Ausführungsbeispiel.

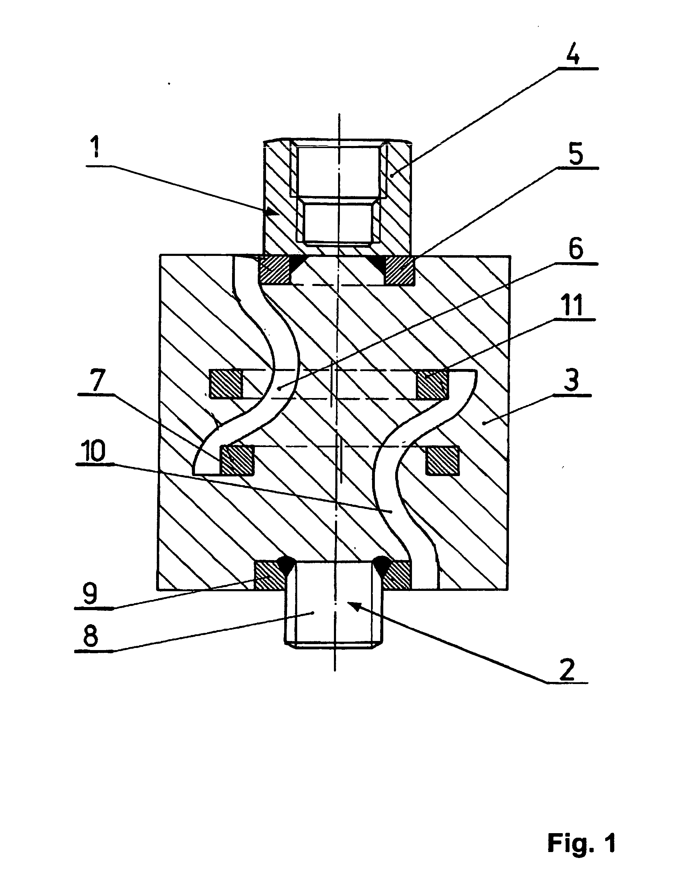

Die Erfindung wird im Folgenden anhand des in der Zeichnung dargestellten Ausführungsbeispiels näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet. In der Zeichnung bedeutet:
- Fig. 1: einen Längsschnitt durch die isolierende Verbindung nach der Erfindung.

Die kälteisolierte Verbindung nach der Erfindung umfasst zwei Gewindeverbindungsstücke 1, 2, dem oberen Gewindeverbindungsstück 1 und dem unteren Gewindeverbindungsstück 2. Beide Gewindeverbindungsstücke sind in einem zylindrischen, aus Isolationswerkstoff, vorzugsweise Polyurethan-Füllmasse, gebildeten Körper 3 eingesetzt. Das obere Gewindeverbindungsstück 1 ist aus einer Muffe 4 gebildet, die eine zweistufige Gewindebohrung aufweist. Die Gewindebohrung ist als Sacklochbohrung ausgeführt. Das obere Gewindeverbindungsstück 1 ist die mit einem kleinen Ring 5 fest verbunden, der wiederum mit einem Sattelarm 6 mit einem großen Ring 7 fest verbunden ist.

Das untere Gewindeverbindungsstück 2 ist aus einer Schraube 8 gebildet, die in einem anderen, kleinen Ring 9 fest eingesetzt ist. Der Ring 9 ist mit einem anderen Sattelarm 10 mit einem anderen, großen Ring **11**fest verbunden ist. Der Sattelarm 6 des oberen Gewindeverbindungsstücks 1 verläuft durch die Öffnung des anderen, großen Rings 11 des unteren Gewindeverbindungsstücks 2. Demgegenüber verläuft er Sattelarm 10 des unteren Gewindeverbindungsstücks 2 durch die Öffnung des großen Rings 7 des oberen Gewindeverbindungsstücks 1.

Das obere Gewindeverbindungsstück 1 und das untere Gewindeverbindungsstück 2 sind in dem zylindrischen Körper 3 eingesetzt, der aus der Thermoisolationsfüllmasse besteht. Das obere Gewindeverbindungsstück 1 wird durch eine Muffe 4 und das untere Gewindeverbindungsstück durch eine Schraube 8 gebildet. Schraube 8 und Muffe 4 sind koaxial zueinander angeordnet.

Im Falle einer mechanischen Beschädigung des Körpers 3, beispielsweise durch ein Feuer, verlagert sich die Einheit des unteren Gewindeverbindungsstücks 2 in Bezug auf die Einheit des obere Gewindeverbindungsstücks 1. Es ergibt sich eine Hakenverbindung der großen Ringe 7 und 11, was vor dem Herunterfallen der Kälteanlage schützt.

### Bezugszeichenliste

- 1: Gewindeverbindungsstück
- 2: Gewindeverbindungsstück
- 3: Körper, thermischer Isolierkörper
- 4: Muffe
- 5: Ring, klein
- 6: Sattelarm
- 7: Ring
- 8: Schraube
- 9: Ring, klein
- 10: Sattelarm
- 11: Ring, groß

## Patentansprüche

1. Thermisch isolierende, feuerbeständige Verbindung mit einem thermischen Isolierkörper (3), an dem zwei Gewindeverbindungsstücke (1, 2) angeordnet sind, **dadurch gekennzeichnet, dass** eine jeweils einen Sattelarm (6, 10) mit einem Ring (5, 7; 9, 11) aufweisende Hakenverbindung (6, 7; 10, 11) in dem Isolierkörper (3) vorgesehen ist, wobei ein erster Teil (6, 7) der Hakenverbindung mit dem ersten Gewindeverbindungsstück (1) und ein zweiter Teil der Hackenverbindung mit dem zweiten Gewindeverbindungsstück (2) verbunden ist, wobei die Hakenverbindung (6, 7; 10, 11) bei mechanischer Beschädigung des Isolierkörpers (3) oder im Falle eines Feuers und der Verlagerung des zweiten Gewindeverbindungsstücks (2) in Bezug auf das erste Gewindeverbindungsstück (1) aktiviert wird, indem das erste Gewindeverbindungsstück (1) und das zweite Gewindeverbindungsstück (2) durch die Hakenverbindung (6, 7; 10, 11) miteinander unverlierbar gehalten werden.

2. Isolierende Verbindung nach Anspruch 1, **dadurch gekennzeichnet, dass** beide Teile der Hakenverbindung jeweils einen Sattelarm (6) im Isolierkörper (3) umfassen, der mit einem im Isolierkörper (3) angeordneten Ring (7) fest verbunden ist, wobei der erste Sattelarm (6) des ersten Gewindeverbindungsstücks (1) durch die Öffnung des durch den zweiten Sattelarm (10) mit dem zweiten Gewindeverbindungsstück (2) verbundenen Rings (11) verläuft und der zweite Sattelarm (10) des zweiten Gewindeverbindungsstücks (2) durch die Öffnung des durch den ersten Sattelarm (6) mit dem ersten Gewindeverbindungsstück (1) verbundenen Rings (7) verläuft.

3. Isolierende Verbindung nach Anspruch 1, **dadurch gekennzeichnet, dass** der Isolierkörper (3) Polyurethan-Füllmasse umfasst.

4. Isolierende Verbindung nach Anspruch 1 oder 2, **dadurch gekennzeichnet, dass** das erste Gewindeverbindungsstück (1) aus einer Muffe (4) mit einer zweistufigen Gewindebohrung besteht, welche als Sacklochbohrung ausgeführt ist.

5. Isolierende Verbindung nach einem der vorangehenden Ansprüche, **dadurch gekennzeichnet, dass** das zweite Gewindeverbindungsstück (2) aus einer Schraube (8) besteht.

6. Isolierende Verbindung nach einem der vorangehenden Ansprüche, **dadurch gekennzeichnet, dass** beide Gewindeverbindungsstücke (1, 2) zueinander koaxial angeordnet sind.

7. Isolierende Verbindung nach einem der vorangehenden Ansprüche, **dadurch gekennzeichnet, dass** der Isolierkörper (3) zylindrisch ausgebildet ist.

8. Isolierende Verbindung nach einem der vorangehenden Ansprüche, **dadurch gekennzeichnet, dass** die Gewindeverbindungsstücke **(1**2) jeweils in, bzw. an, einem Ring (5, 9) verankert sind, am dem jeweils einer der Sattelarme (6, 10) der Hakenverbindung fest verbunden ist.

## Claims

1. A thermally insulating and fire-resistant connection device including a thermally insulating body (3) having two threaded connection pieces (1, 2) mounted thereon **characterized in that** a hook connection (6, 7; 10, 11) each consisting of a curved arm (6, 10) and a ring (5, 7; 9, 11) is provided within said insulating body (3), with a first portion (6, 7) of said hook connection being connected to said first threaded connection piece (1) and a second portion of said hook connection being connected to said second threaded connection piece (2), wherein said hook connection (6, 7; 10, 11) will be activated in case of mechanical damage to the insulating body (3) or fire and a change in position of the second threaded connection piece (2) relative to said first threaded connection piece (1) by said hook connection (6, 7; 10, 11) captively holding together said first threaded connection piece (1) and said second threaded connection piece (2).

2. The insulating connection device of claim 1 **characterized in that** both portions of said hook connection each comprise a curved arm (6) within said insulating body (3) which is firmly connected to a ring (7) provided within said insulating body (3), with said first curved arm (6) of said first threaded connection piece (1) extending through the opening of the ring (11) that is connected to said second threaded connection piece (2) via said second curved arm (10), and said second curved arm (10) of said second threaded connection piece (2) extending through the opening of the ring (7) that is connected to said first threaded connection piece (1) via said first curved arm (6).

3. The insulating connection device of claim 1 **characterized in that** said insulating body (3) comprises polyurethane filler.

4. The insulating connection device of claims 1 or 2 **characterized in that** said first threaded connection piece (1) consists of a socket (4) with a two-step threaded bore which is in the form of a blind bore.

5. The insulating connection device of one of the preceding claims **characterized in that** said second threaded connection piece (2) consists of a screw (8).

6. The insulating connection device of one of the preceding claims **characterized in that** said two threaded connection pieces (1, 2) are coaxially mounted relative to each other.

7. The insulating connection of one of the preceding claims **characterized in that** said insulating body (3) is cylindrical in shape.

8. The insulating connection of one of the preceding claims **characterized in that** said threaded connection pieces (1, 2) are each mounted within or on a ring (5, 9) to which one of said curved arms (6,10) of said hook connection is firmly connected.

## Revendications

1. Connexion à isolation thermique résistante au feu avec un corps isolant thermique (3) sur lequel sont placées deux pièces d'assemblage par filetage (1, 2), **caractérisée en ce qu'**une liaison par crochet (6, 7; 10, 11) présentant respectivement un bras de selle (6,10) avec un anneau (5, 7; 9, 11) est prévue dans le corps isolant (3), sachant qu'une première pièce (6, 7) de la liaison de crochet est reliée à la première pièce d'assemblage par filetage (1) et une deuxième pièce de la liaison de crochet est reliée à la deuxième pièce d'assemblage par filetage (2), sachant que la liaison de crochet (6, 7; 10, 11) est actionnée lors d'un endommagement mécanique du corps isolant (3) ou en cas de feu et du déplacement de la deuxième pièce d'assemblage par filetage (2) par rapport à la première pièce d'assemblage par filetage (1), la première pièce d'assemblage par filetage (1) et la deuxième pièce d'assemblage par filetage (2) étant maintenues l'une avec l'autre de manière imperdable par la liaison de crochet (6, 7; 10, 11).

2. Connexion isolante selon revendication 1, **caractérisé en ce que** les deux parties de la liaison de crochet comprennent respectivement un bras de selle (6) dans le corps isolant, qui est assemblé fermement à un anneau (7) placé dans le corps isolant (3), sachant que le premier bras de selle (6) de la première pièce d'assemblage par filetage (1) passe à travers l'ouverture de l'anneau relié (11) par le deuxième bras de selle (10) à la deuxième pièce d'assemblage par filetage (2) et le deuxième bras de selle (2) passe à travers l'ouverture de l'anneau (7) relié par le premier bras de selle (6) à la première pièce d'assemblage fileté (1).

3. Connexion isolante selon revendication 1, **caractérisée en ce que** le corps isolant (3) comprend de la masse de scellement en polyuréthane.

4. Connexion isolante selon revendication 1 ou 2, **caractérisée en ce que** la première pièce d'assemblage par filetage (1) est constituée d'un embout (4) avec un trou taraudé à deux niveaux, qui est réalisé en tant que trou borgne.

5. Connexion isolante selon l'une des revendications précédentes, **caractérisée en ce que** la deuxième pièce d'assemblage par filetage (2) est constituée d'une vis.

6. Connexion isolante selon l'une des revendications précédentes, **caractérisé en ce que** les deux pièces d'assemblage par filetage (1, 2) sont placées de manière coaxiale l'une par rapport à l'autre.

7. Connexion isolante selon l'une des revendications précédentes, **caractérisée en ce que** le corps isolant (3) est façonné de forme cylindrique.

8. Connexion isolante selon l'une des revendications précédentes, **caractérisée en ce que** les pièces d'assemblage par filetage (1, 2) sont ancrées respectivement dans ou sur un anneau (5, 9) sur lequel respectivement un des bras de selle (6,10) de la liaison par crochet est fermement assemblé.
